# EUROPEAN PATENT APPLICATION

(11) **EP 4 385 968 A1**
(43) Date of publication of application: **19.06.2024**
(21) Application number: 23212884.3
(22) Date of filing: 29.11.2023
(51) Int. Cl.: C04B 41/00, C04B 41/53, C04B 41/87, C04B 41/91, F01D 5/00

(54) **ARTICLE AND METHOD OF MAKING A CERAMIC MATRIX COMPOSITE ARTICLE**

(30) Priority: 13.12.2022 US 202218080508
(71) Applicant: RTX Corporation, Farmington, CT 06032 (US)
(72) Inventor: WHITE III, Robert A., Meriden, 06450 (US); ABDI, Ahmed Abdillahi, Oceanside, 92058 (US); LITTON, David A., West Hartford, 06107 (US); ROGERS, Daniel S., Lyman, 04002 (US)
(74) Representative: Dehns

(57) **Abstract**

A method of correcting a manufactured article (102) includes applying a machinable coating (106) to a manufactured ceramic matrix composite article (102) with a manufacturing artifact (104) and machining the machinable coating (106) to provide a desired geometry. A method of correcting a manufactured article (102) and a corrected article (100) are also disclosed.

## Description

### BACKGROUND

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

Various components of the gas turbine engine may be made of ceramic matrix composites. However, certain method of manufacturing ceramic matrix composite articles leave behind manufacturing defects that can be difficult to correct.

### SUMMARY OF THE INVENTION

From one aspect, there is provided a method of correcting a manufactured article that, among other possible things, includes applying a machinable coating to a manufactured ceramic matrix composite article with a manufacturing artifact and machining the machinable coating to provide a desired geometry.

In a further example of the foregoing, the machining includes at least one of grinding, ultrasonic machining, water guided laser, milling, and reaming.

In a further example of any of the foregoing, the coating includes at least one of rare earth silicates, alkaline earth silicates, alkaline earth aluminosilicates, yttria-stabilized zirconia, alumina-stabilized zirconia, hafnon, zircon, yttria, mullite, titania, chromia, silicon, silicon oxides, silicon carbides, silicon oxycarbides, barium-magnesium aluminosilicate, hafnium oxides, hafnium silicon oxides, alumina-stabilized zirconia, zirconium oxides, yttrium oxides, and combinations thereof.

In a further example of any of the foregoing, the coating includes at least one of hafnon, zircon, and mullite.

In a further example of any of the foregoing, the artifact includes at least one of a dent, a depression, or a hole.

In a further example of any of the foregoing, the machinable coating fills in the artifact after the applying.

In a further example of any of the foregoing, the artifact is a protrusion.

In a further example of any of the foregoing, the machinable coating entombs the artifact.

In a further example of any of the foregoing, the applying includes applying the machinable coating to a geometry that is larger than a desired geometry.

In a further example of any of the foregoing, the machining includes machining the machinable coating to the desired geometry.

In a further example of any of the foregoing, the method also includes manufacturing the manufactured article by one of chemical vapor infiltration and melt infiltration. The artifact is an artifact of a connection between a fixture holding the article during the chemical vapor infiltration or melt infiltration.

There is also provided a method of correcting a manufactured article that, among other possible things, includes providing a preform of ceramic-based reinforcements held in place in place at least one fixture; infiltrating the preform with a ceramic-based matrix to form a manufactured article having at least one manufacturing artifact corresponding to a connection point between the at least one fixture and the preform; and correcting the manufacturing artifact by applying a machinable coating to the manufactured article.

In a further example of the foregoing, the artifact includes at least one of a dent, a depression, or a hole.

In a further example of any of the foregoing, the machinable coating fills in the artifact after the applying.

In a further example of any of the foregoing, the artifact is a protrusion.

In a further example of any of the foregoing, the machinable coating entombs the artifact.

In a further example of any of the foregoing, the method also includes machining the machinable coating to the desired geometry.

There is also provided a corrected article that, among other possible things, includes a manufactured ceramic matrix composite article. The manufactured ceramic matrix composite article has a manufacturing artifact. The corrected article also includes a machinable coating on a surface of the manufactured ceramic matrix composite article correcting the manufacturing artifact such that the manufactured ceramic matrix composite article has a desired geometry.

In a further example of the foregoing, the machinable coating fills in the manufacturing artifact.

In a further example of any of the foregoing, the machinable coating entombs the manufacturing artifact.

### BRIEF DESCRIPTION OF THE DRAWINGS

Figure 1 schematically illustrates an example gas turbine engine.
Figures 2A-B schematically illustrate an article with an example manufacturing artifact that has been corrected.
Figure 3 schematically illustrates an article with another example manufacturing artifact that has been corrected.

### DETAILED DESCRIPTION

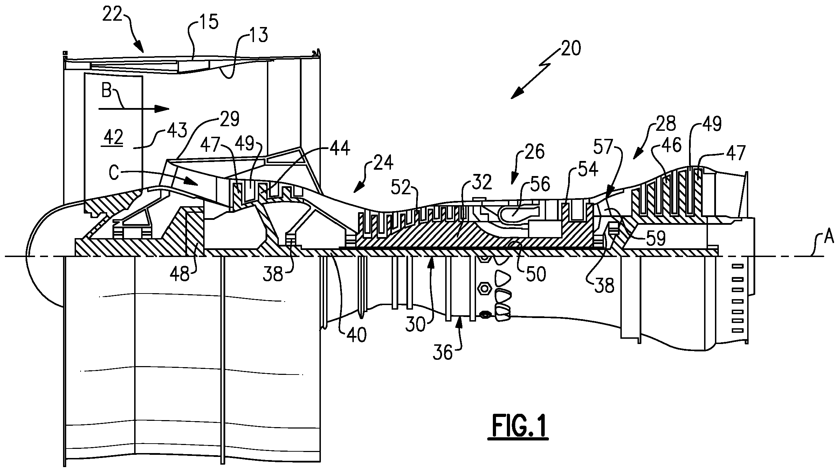

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

Ceramic matrix composites ("CMCs") are known in the art and will not be described in detail herein, but generally include ceramic-based reinforcements such as fibers (which may be continuous) disposed in a ceramic-based matrix material. CMCs can be used in various areas of the engine 20, for instance, as airfoils. Certain methods of manufacturing CMCs, such as chemical vapor infiltration (CVI) and melt infiltration (MI) require tooling or other fixtures to hold a preform consisting of ceramic-based reinforcements while the preform is infiltrated with the ceramic-based matrix material. These fixtures can leave behind manufacturing artifacts/deposits due to the connections between the preform and the fixture. Post-processing steps to remove such artifacts/deposits are difficult in some circumstances because the typical processes that would be used such as grinding, cutting, etc. may damage or disturb the reinforcements, interfering with the mechanical integrity of CMC. Therefore, where there are strict geometric requirements for the CMC article CVI and MI would not have been suitable, even though they are relatively cost-effective and time-effective manufacturing processes for making CMCs. This application will describe a method of addressing manufacturing artifacts/deposits on CMC articles that enables the use of CMI and MI for making the CMC articles even when there are strict geometric requirements for the article.

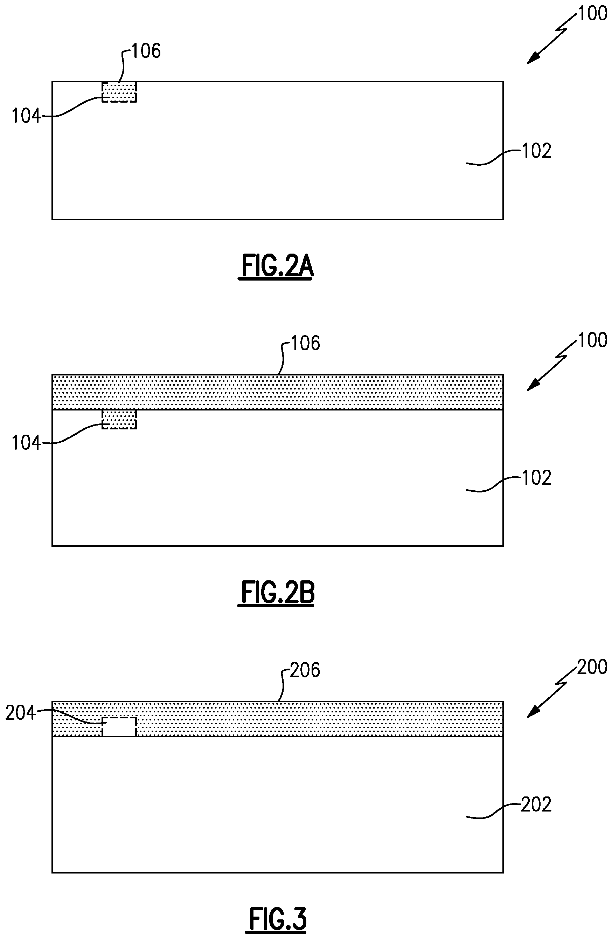

Figure 2A schematically illustrates a corrected article 100. The corrected article 100 includes a manufactured article 102 with a manufacturing artifact 104, which in this case is a dent/depression or hole left behind from a fixture that is inserted or embedded into the article 102. In order to correct the artifact 104, a machinable coating 106 is applied to a surface of the nonconforming article 102, filling in the artifact 104. The coating 106 is "machinable" in that it can be subject to grinding, ultrasonic machining, water guided laser, milling, reaming, or another machining method to reduce it thickness and/or smooth its surface without any negative effects to its integrity.

The machinable coating 106 may include rare earth silicates, alkaline earth silicates, alkaline earth aluminosilicates, yttria-stabilized zirconia, alumina-stabilized zirconia, mullite, titania, chromia, silicon, silicon oxides, silicon carbides, silicon oxycarbides, barium-magnesium aluminosilicate, hafnium oxides such as hafnon, hafnium silicon oxides, alumina-stabilized zirconia, zirconium oxides such as zircon, yttrium oxides such as yttria, mullite, and combinations thereof. In a particular example, the machinable coating 106 includes at least one of hafnon, zircon, and mullite.

The machinable coating 106 is then machined by grinding, ultrasonic machining, water guided laser, milling, reaming, or another machining method to reduce it thickness and/or smooth its surface, and to provide a desired surface profile for the repaired article. The application and machining of the machinable coating leave the article 102 undisturbed, meaning the artifact 104 is addressed without compromising the article 102. In one example, shown in Figure 2A, all or substantially all of the machinable coating 106 is removed from the surface of the article 102 during the machining, leaving only the machinable coating 106 that filled in the artifact 104. In another example, shown in Figure 2B, a layer of machinable coating 106 can remain on the surface of the article 102.

Figure 3 schematically illustrates another example corrected article 200. The corrected article 200 includes a manufactured article 202 with a manufacturing artifact 204, which in this case is a protrusion such as a landing or connection point for mating with fixtures or tooling. The article 202 is corrected in the same way as the nonconforming article 102 discussed above except that the machinable coating 206 is applied to cover or entomb the artifact 204 and provide a desired geometry/size after being machined as described above. The machinable coating 206 can have the same composition as the machinable coating 106 discussed above. Again, in this example, the artifact 204 is addressed without disturbing the article 202.

In the example of Figures 2A-B or the example of Figure 3, the machinable coating 106/206 may be first applied with a thickness/geometry that is greater than the desired thickness/geometry, and then machined down to the desired thickness/geometry as discussed above.

As used herein, the term "about" has the typical meaning in the art, however in a particular example "about" can mean deviations of up to 10% of the values described herein.

Although a combination of features is shown in the illustrated examples, not all of them need to be combined to realize the benefits of various examples of this disclosure. In other words, a system designed according to an example of this disclosure will not necessarily include all of the features shown in any one of the figures or all of the portions schematically shown in the figures. Moreover, selected features of one example may be combined with selected features of other examples.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A method of correcting a manufactured article (102; 202), comprising:
applying a machinable coating (106; 206) to a manufactured ceramic matrix composite article (102; 202) with a manufacturing artifact (104; 204); and
machining the machinable coating (106; 206) to provide a desired geometry.

2. The method of claim 1, wherein the machining includes at least one of grinding, ultrasonic machining, water guided laser, milling, and reaming.

3. The method of claim 1 or 2, wherein the coating (106; 206) includes at least one of rare earth silicates, alkaline earth silicates, alkaline earth aluminosilicates, yttria-stabilized zirconia, alumina-stabilized zirconia, hafnon, zircon, yttria, mullite, titania, chromia, silicon, silicon oxides, silicon carbides, silicon oxycarbides, barium-magnesium aluminosilicate, hafnium oxides, hafnium silicon oxides, alumina-stabilized zirconia, zirconium oxides, yttrium oxides, and combinations thereof.

4. The method of claim 3, wherein the coating (106; 206) includes at least one of hafnon, zircon, and mullite.

5. The method of any preceding claim, further comprising manufacturing the manufactured article (102; 202) by one of chemical vapor infiltration and melt infiltration, and wherein the artifact (104; 204) is an artifact (104; 204) of a connection between a fixture holding the article (102; 202) during the chemical vapor infiltration or melt infiltration.

6. The method of any preceding claim, wherein the applying includes applying the machinable coating (106; 206) to a geometry that is larger than a desired geometry.

7. A method of correcting a manufactured article (102; 202), comprising:
providing a preform of ceramic-based reinforcements held in place in place at least one fixture;
infiltrating the preform with a ceramic-based matrix to form a manufactured article (102; 202) having at least one manufacturing artifact (104; 204) corresponding to a connection point between the at least one fixture and the preform;
correcting the manufacturing artifact (104; 204) by applying a machinable coating (106; 206) to the manufactured article (102; 202).

8. The method of claim 6 or 7, further comprising machining the machinable coating (106; 206) to the desired geometry.

9. The method of any preceding claim, wherein the artifact (104; 204) includes at least one of a dent, a depression, or a hole.

10. The method of claim 9, wherein the machinable coating (106; 206) fills in the artifact (104; 204) after the applying.

11. The method of any of claims 1 to 8, wherein the artifact (104; 204) is a protrusion.

12. The method of claim 11, wherein the machinable coating (106; 206) entombs the artifact (104; 204).

13. A corrected article (100; 200), comprising:
a manufactured ceramic matrix composite article (102; 202), the manufactured ceramic matrix composite article (102; 202) having a manufacturing artifact (104; 204); and
a machinable coating (106; 206) on a surface of the manufactured ceramic matrix composite article (102; 202) correcting the manufacturing artifact (104; 204) such that the manufactured ceramic matrix composite article (102; 202) has a desired geometry.

14. The corrected article of claim 13, wherein the machinable coating (106; 206) fills in the manufacturing artifact (104; 204).

15. The corrected article of claim 13, wherein the machinable coating (106; 206) entombs the manufacturing artifact (104; 204).
